**Europäisches Patentamt**

(19) **European Patent Office**

**Office européen des brevets**

(11) Publication number: **0 030 535**
**B1**

(12) **EUROPEAN PATENT SPECIFICATION**

(45) Date of publication of patent specification: **15.12.82**

(21) Application number: **80901127.3**

(22) Date of filing: **12.06.80**

(86) International application number:
**PCT/SE80/00166**

(87) International publication number:
**WO 80/02846 24.12.80 Gazette 80/29**

(51) Int. Cl.³: **C 09 K 3/32, B 01 J 20/26, C 08 J 9/36**

(54) **METHOD AND DEVICE IN MANUFACTURING FOAMED UREA FORMALDEHYDE MATERIAL TO BE USED AS A SORBENT.**

(30) Priority: **19.06.79 SE 7901524**

(43) Date of publication of application:
**24.06.81 Bulletin 81/25**

(45) Publication of the grant of the patent:
**15.12.82 Bulletin 82/50**

(84) Designated Contracting States:
**FR**

(56) References cited:
**DE - B - 1 944 636**
**GB - A - 1 328 648**
**SE - B - 336 470**
**SE - B - 377 038**
**SE - B - 401 003**
**US - A - 3 598 729**

**Journal of the Institute of Petroleum, Volume 57, No 553, January 1971, "The Use of Floating Asorbents and Gelling Techniques for Combating Oil Spills on Water", p 35.**

(73) Proprietor: **JAN BERGLUND PRODUKTIONS AB**
**Prästbergavägen 41**
**S-234 00 Lomma (SE)**

(72) Inventor: **BERGLUND, Jan-Olof Vallentin**
**Prästbergavägen 41**
**S-234 00 Lomma (SE)**

(74) Representative: **Ström, Tore et al,**
**c/o Ström & Gulliksson AB Rundelsgatan 14**
**S-211 36 Malmö (SE)**

# Method and device in manufacturing foamed urea formaldehyde material to be used as a sorbent

The present invention relates to a method and a device in manufacturing foamed urea formaldehyde material or resin to be used as a sorbent.

It is previously known e.g. as disclosed in SE-A-336,470 to use foamed urea formaldehyde material as a sorbent, e.g. for oil, chemicals or the like. Then, the foamed material is prepared by mixing a resin solution into a hardener solution. The prepared urea formaldehyde material is allowed to harden before it can be comminuted into smaller pieces, which are poured or sprinkled over the liquid to be absorbed and/or adsorbed by the foamed urea formaldehyde material.

A problem which has been difficult to overcome so far, especially when using the foamed urea formaldehyde material outdoors, is the low density of the material. Already at a moderate wind velocity there is a great risk of the spread foamed urea formaldehyde material blowing away before it has been entrained by the liquid to be removed by the foamed formaldehyde material.

According to SE-A-336,470, this drawback is overcome by instantly hardening the foamed urea formaldehyde material, which is then supplied while being comminuted, directly to the location where it is to be used. According to DE-A-19 44 636, said drawback is overcome in using a sorbent comprising foamed polyurethane resins and/or hardened polycondensate resins, by moistening the sorbent when it is to be used.

The object of the invention is to provide a method in manufacturing foamed urea formaldehyde material to be used as a sorbent, which substantially eliminates said drawbacks associated with the low density of the sorbent which can be packed and distributed in a condition wherein it is ready for use.

A further object of the invention is to provide a method in manufacturing foamed formaldehyde material, imparting to the material an improved ability of sorbing liquids rapidly.

A still further object of the invention is to provide a method in manufacturing foamed urea formaldehyde material imparting a substantially higher density to the material without adversely affecting the sorption properties of the material.

Another object of the invention is to provide a method of manufacturing foamed urea formaldehyde material which advantageously can be used in sorbing friction reducing liquids, e.g. in connection with cleaning-up places of road accidents where spilled oil and possibly other liquids may constitute a danger to other road users.

Yet another object of the invention is to provide a sorbent from which absorbed and/or adsorbed liquid can easily be recovered.

A further object of the invention is to provide a method in manufacturing foamed urea formaldehyde material, wherein the content of free formaldehyde is reduced.

These objects are achieved according to the present invention by the method and device in manufacturing foamed urea formaldehyde material defined in the appended claims.

The dry weight of a hardened foamed urea formaldehyde material is about 10 kg/m³, which means that the material is extremely light and, therefore, in this condition is not suited for outdoor use as a sorbent. By comminuting the manufactured hardened foamed urea formaldehyde material prior to the material being dried, and packing the comminuted material in hermetically sealed containers or bags, an increase of the density of the material up to ten times is achieved. Therefore, such a moist foamed urea formaldehyde material manufactured according to the present invention is substantially better suited for use as an outdoor sorbent.

The increase of the density of the sorbent does not mean that the sorption properties thereof are substantially impaired or that the sorbent is suited exclusively for outdoor use. Thus, the sorbent may well be used indoors in homes, restaurants, workshops or the like, i.e. at any place where liquids may have to be removed.

Preferably, the density of the hardened foamed urea formaldehyde material is between 65 and 100 kg/m³. The material is comminuted into pieces the average diameter of which ranges from 10 to 40 mm. The ability of the foamed urea formaldehyde material to absorb quickly a liquid is dependent on the specific characteristics of said liquid. To increase the ability of the foamed material to absorb liquids, said comminution of the material provides smaller pieces preferably which a diameter ranging from 20 to 30 mm. Accordingly, a liquid which is difficult to absorb by the foamed urea formaldehyde material is interacted with a comminuted material wherein the average diameter of the individual pieces is smaller, while a liquid which is more easily absorbed is interacted with a material wherein the diameter of the pieces of foam material may be larger.

Preferably, the foam material is delivered in hermetically sealed packages in which the pieces of the material are given an average diameter suitable for the intended use, i.e. the diameter is dependent on the liquid to be absorbed.

To further reduce the risk of the foamed urea formaldehyde material blowing away at outdoor use, the material preferably is coated with a surfactant (a surface active agent) which enables the liquid to be absorbed to penetrate quickly into the foamed urea formaldehyde material. Accordingly, the sorbent will immediately "adhere" to the liquid surface onto which the material is poured. This surfactant is supplied to the foamed urea formaldehyde material after the comminution of this material into small pieces, while the material is carried through a closed passage under the influence of an air stream, the surfactant being sprayed into the passage as a mist.

To reduce the content of free formaldehyde in the manufactured foamed urea formaldehyde material, an excess of 225% of diammonium hydrogen phosphate is sprayed into said passage. Thus, the concentration of free formaldehyde is reduced from 0.75 w.p. of the material to 0.04 w.p.

By mixing splinters of burnt clay (grog) into the foamed urea formaldehyde material the density of the prepared foamed urea formaldehyde material will be increased. This mixture in combination with the moisture content of the material provides a sorbent which is well suited for outdoor use.

By mixing splinters of burnt clay into the material an increase of the friction coefficient for the support on which the sorbent has been spread is also achieved, which is of a great value when the sorbent is used for sorption of liquids on surfaces carrying heavy traffic.

For several different reasons, it may be advantageous to recover, in a simple manner, the absorbed liquid from the sorbent. E.g. the absorbed liquid may be very expensive as in case of several hydraulic fluids, it may be toxic and difficult to destroy, and in many cases it may be used at once after the recovery thereof from the sorbent. In addition to the recovery of the absorbed liquid, which can be carried out by centrifugation or compression of the sorbent entrained by the liquid, it is possible to reuse the sorbent itself in most cases.

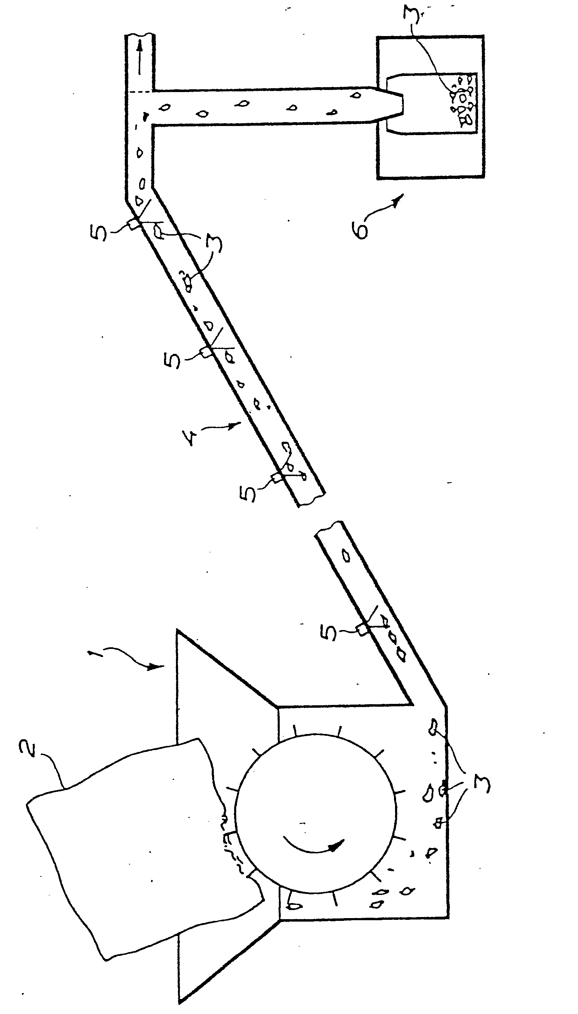

The invention will now be described with reference to the device, shown in the drawing, for manufacturing the foamed urea formaldehyde material by using the method according to the invention.

In the drawing, the figure is a diagrammatic side view of the device used for manufacturing the foamed urea formaldehyde material. 1 indicates comminuting the hardened foamed urea formaldehyde material or resin 2, which has been hardened to form big pieces. After the comminution the comminuted foamed urea formaldehyde material 3 is carried through a tube conduit 4 under the influence of an air stream. Nozzles 5 are arranged in the conduit for spraying a mist of a surfactant and a solution of diammonium hydrogen phosphate into the conduit, which are absorbed by the sorbent during the passage through the conduit. A packing device 6 for the comminuted foamed urea formaldehyde material treated with surfactant and diammonium hydrogen phosphate is associated with the conduit 4, and the sorbent is packed under hermetic seal by this packing device.

In one embodiment of the method and the device according to the invention a conduit having a diameter of 25 cm and a length of about 10 m is being used. The surfactant and diammonium hydrogen phosphate are sprayed into the conduit via the nozzles to such an amount that the surface layer of the sorbent is coated therewith, and as a consequence thereof the material increases in weight. The fan used for passing air with the material entrained therein, through the conduit preferably should be placed directly in the conduit and preferably should impart to the comminuted sorbent a velocity of about 10 m/s.

Splinters of clay are mixed into the sorbent preferably in connection with the foaming thereof. Thus, a conduit receiving dry splinters of clay is connected to the gas conduit which is used for supplying gas during the foaming operation. A very exact mixing of the splinters into the sorbent can be achieved by ejector action and by the choice of a suitable feeding pressure on the splinters of clay in the conduit.

A foamed urea formaldehyde material or resin suitable as a sorbent may have the following composition expressed in percentage of weight.

| | |
|---|---|
| N | 30.5 |
| N (soluble) | 0.25 |
| P2/5 | 0.57 |
| $K_2O$ | 0.0016 |
| MgO | 0.004 |
| B | 0.0001 |
| Fe | 0.0009 |
| Mn | 0.0005 |
| Cu | 0.0034 |
| Zn | 0.0004 |
| Mo | 0.0005 |
| C | 33.9 |
| $H_2O$ | 34.7686 |

If the material is treated with a solution of diammonium hydrogen phosphate, the following composition expressed in percentage of weight is obtained.

| | |
|---|---|
| Nitrogen | 24.8 |
| Carbon | 27.5 |
| Water | 43.7 |
| Ammonium phosphates | 3.3 |
| hexamethylentetramine | 0.4 |
| Formaldehyde | 0.04 |
| Small quantities of water soluble metallic salts (surface active agents ~1.0) | |

The method and the device according to the present invention are not limited to sorbents having the above compositions. It is also possible to use other foam materials having similar properties.

# Claims

1. A method for increasing the density of foamed urea formaldehyde pieces to be used as a sorbent, e.g. for oil, characterized in that after mixing resin and hardener solutions the foamed urea formaldehyde material is hardened until it is possible to comminute the material without the material collapsing, that the material is then comminuted and packed without being dried, with preserved moisture content, into hermetically sealed containers or bags.

2. A method according to claim 1, characterized in that the hardened material having a density between 65 and 100 kg/m³ is comminuted into pieces having an average diameter ranging from 10 to 40 mm.

3. A method according to claim 2, characterized in that the comminuted foamed urea formaldehyde material, by the influence of an air stream, is carried through a closed passage to package means, a surfactant being sprayed as a mist into the passage.

4. A method according to claim 2, characterized in that the comminuted foamed urea formaldehyde material by the influence of an air stream, is carried through a closed passage to package means, a solution of diammonium hydrogen phosphate being sprayed as a mist into the passage.

5. A method according to any of the preceding claims, characterized in that splinters of burnt clay having an average length ranging from 3 to 6 mm are introduced into the mixture of the foamed urea formaldehyde material in addition to the resin and hardener solutions, to increase the density of the foam material.

6. A device for manufacturing foamed urea formaldehyde material to be used as a sorbent, by the method according to claim 3, characterized by comminuting means (1) for comminuting the hardened foamed urea formaldehyde material (2): a conduit (4), nozzles (5) opening into the conduit for spraying agents into the conduit; and packing means (5) for packing under hermetic seal the comminuted foamed urea formaldehyde material coated with said agents.

# Revendications

1. Procédé d'augmentation de la densité de morceaux d'urée formaldéhyde en mousse devant être utilisés en produit d'absorption et/ou d'adsorption, par exemple pour l'huile, caractérisé en ce qu'après mélange de solutions de résine et durcisseur, le matériau en urée formaldéhyde en mousse est durci jusqu'à ce qu'il soit possible de le pulvériser en morceaux sans que le matériau ne s'effondre, en ce que le matériau est ensuite pluvérisé en morceaux et emballé sans être séché, avec une teneur en humidité préservée, dans des conteneurs ou sacs scellés hermétiquement.

2. Procédé selon la revendication 1, caractérisé en ce que le matériau durci ayant une densité comprise entre 65 et 100 kg/m³ est pulvérisé en morceaux ayant un diamètre moyen compris entre 10 et 40 mm.

3. Procédé selon la revendication 2, caractérisé en ce que le matériau en urée formaldéhyde en mousse pulvérisé en morceaux est, sous l'effet d'un courant d'air, acheminé dans un canal fermé jusqu'à un moyen d'emballage, un produit tension-actif étant pulvérisé sous forme de brouillard dans le canal.

4. Procédé selon la revendication 2, caractérisé en ce que le matériau en urée formaldéhyde en mousse pulvérisé en morceaux est, sous l'effet d'un courant d'air, acheminé dans un canal fermé jusqu'à un moyen d'emballage, une solution de phosphate acide d'ammoniaque étant pulvérisée sous forme de brouillard dans le canal.

5. Procédé selon l'une quelconque des revendications précédentes, caractérisé en ce que des fragments d'argile calcinée ayart une longeur moyenne comprise entre 3 et 6 mm sont introduits dans le mélange de matériau en urée formaldéhyde en mousse en plus des solutions de résine et de durcisseur, de manière à augmenter le densité du matériau en mousse.

6. Dispositif de fabrication de matériau en urée formaldéhyde en mousse devant être utilisé en produit d'absorption et/ou d'adsorption, selon le procédé de la revendication 3, caractérisé en ce qu'il comporte un moyen de pulvérisation en morceaux (1) pour pulvériser en morceaux le matériau en urée formaldéhyde en mousse durci (2); une conduite (4), des buses (5) débouchant dans la conduite pour pulvériser des agents dans celle-ci; et un moyen d'emballage (5) pour emballer hermétiquement le matériau urée formaldéhyde en mousse, pulvérisé en morceaux, revêtu desdits agents.

# Patentansprüche

1. Verfahren zur Erhöhung der Dichte von geschäumten, harnstoff-Formaldehydstücken, die als ein Sorptionsmittel, z.B. für Öl, verwendet werden, dadurch gekennzeichnet, daß nach einem Mischen von Harz und Härterlösungen das geschäumte Harnstoff-Formaldehyd Produkt erhärtet wird, bis es möglich ist das Material zu zerkleinern ohne daß es zusammensinkt, daß dann das Material zerkleinert und ohne Trocknung mit konserviertem Feuchtigkeitsgehalt in hermetisch abgedichtete Behälter oder Säcke verpackt wird.

2. verfahren nach Anspruch 1 dadurch gekennzeichnet, daß das gehärtete und eine Dichte zwischen 65 und 100 kg/m³ aufweisende Material in Stücke zerkleinert wird, die einen durchschnittlichen Durchmesser aufweisen, der in einem Bereich von 10 bis 40 mm liegt.

3. Verfahren nach Anspruch 2 dadurch gekennzeichnet, daß das zerkleinerte geschäumte Harnstoff-Formaldehyd Material durch den Einfluß eines Luftstromes durch eine geschlossene Passage zu einer Packeinrichtung transportiert wird, wobei ein oberflächenaktives Mittel als Nebel in die Passage gesprüht wird.

4. Verfahren nach Anspruch 2 dadurch gekennzeichnet, daß das zerkleinerte geschäumte Harnstoff-Formaldehyd Material durch den Einfluß eines Luftstromes durch eine geschlossene Passage zu einer Verpackungseinrichtung transportiert wird, wobei eine Lösung aus Diammonium-Hydrogenphosphat als Nebel in die Passage gesprüht wird.

5. Verfahren nach einem der vorstehenden Ansprüche dadurch gekennzeichnet, daß Splitter aus gebranntem Ton, die eine durchschnittliche Länge zwischen 3 und 6 mm aufweisen, im die Mischung aus geschäumtem Harnstoff-Formaldehyd material zusätzlich zu dem Harz und der Härterlösung eingegeben werden, um die Dichte des Schaummaterials zu erhöhen.

6. Vorrichtung zur Herstellung von geschäumtem Harnstoff-Formaldehyd Material, das als ein Sorptionsmittel verwendet wird nach dem Verfahren entsprechend Anspruch 3 gekennzeichnet durch eine Zerkleinerungseinrichtung (1) zur Zerkleinerung des gehärteten geschäumten Harnstoff-Formaldehyd Materiales (2); einem Kanal (4), Düsen (5), die sich in den Kanal zum Einsprühen von Mittel in den Kanal öffnen; une eine Verpackungseinrichtung (6) zum Verpacken unter hermetischer Abdichtung des zerkleinerten geschäumten Harnstoff-Formaldehyd Materiales, das mit den genannten Mitteln beschichtet ist.